# EUROPEAN PATENT APPLICATION

(11) **EP 4 296 229 A1**
(43) Date of publication of application: **27.12.2023**
(21) Application number: 22779990.5
(22) Date of filing: 11.03.2022
(51) Int. Cl.: C01B 33/18, B65D 81/24

(54) **PACKAGING BODY AND PRODUCTION METHOD THEREFOR**

(30) Priority: 31.03.2021 JP 2021061694
(71) Applicant: Denka Company Limited, Tokyo 103-8338 (JP)
(72) Inventor: SHIOTSUKI, Hiroyuki, Tokyo 103-8338 (JP); AIKYO, Teruhiro, Tokyo 103-8338 (JP); FUKUDA, Takashi, Tokyo 103-8338 (JP)
(74) Representative: Gulde & Partner
(86) International application number: PCT/JP2022/010970
(87) International publication number: WO 2022/209769

(57) **Abstract**

The packaging body of the present invention includes a metal oxide powder and a bag that has the metal oxide powder placed therein and is sealed, the bag being filled with at least one gas selected from the group consisting of a noble gas, nitrogen gas, oxygen gas, and dry air, the metal oxide powder being a silica powder or a magnesia powder, the bag having a moisture permeability as measured according to JIS Z 0222-1959 of 0.30 g/(m²•day) or less. The method for producing a packaging body of the present invention includes a production step of producing a metal oxide powder, and a sealing step of placing the metal oxide powder in a bag that is filled with at least one gas selected from the group consisting of a noble gas, nitrogen gas, oxygen gas, and dry air, followed by sealing the bag, the metal oxide powder being a silica powder or a magnesia powder, the bag having a moisture permeability as measured according to JIS Z 0222-1959 of 0.30 g/(m²•day) or less. According to the present invention, it is possible to provide a packaging body for a metal oxide powder in which deterioration in the dielectric loss tangent of the metal oxide powder due to long-term storage can be suppressed, and a method for producing the packaging body.

## Description

### Technical Field

The present invention relates to a packaging body for a metal oxide powder and a method for producing the packaging body.

### Background Art

In recent years, since data communication has been increasingly performed in a larger capacity and at a higher speed in mobile communication systems, materials for use in mobile communication systems are preferably capable of increasing the speed of the signal propagation while reducing the transmission loss of signals. An example of materials for use in mobile communication systems is a composite material of a metal oxide powder, in particular, a silica powder or a magnesia powder, and a resin. Since silica powder and magnesia powder have a low permittivity and a low dielectric loss tangent, the composite material of a silica powder or a magnesia powder and a resin may be capable of increasing the speed of the signal propagation and reducing the transmission loss of signals. However, when OH groups are formed on the surface of the silica powder and magnesia powder, the dielectric loss tangent of the silica powder and magnesia powder increases. Thus, a silica powder and a magnesia powder that have a low density of OH groups formed on the surface are desired. As a silica powder having a low OH group density, for example, a silica powder disclosed in PTL 1 is known as a related art. The silica powder disclosed in PTL 1 has a density of hydrogen bond OH groups of 0 to 4/nm² and a density of isolated OH groups of 3 to 8/nm².

### Citation List

### Patent Literature

PTL 1: JP 2005-139295 A

### Summary of Invention

### Technical Problem

However, there arose a problem in that in even such a silica powder having a low OH group density as disclosed in PTL 1, the dielectric loss tangent increases when stored in a long period of time.

Thus, the present invention has an object to provide a packaging body for a metal oxide powder in which deterioration in the dielectric loss tangent of the metal oxide powder due to long-term storage can be suppressed, and a method for producing the packaging body. Solution to Problem

As a result of intensive and extensive studies, the present inventors have found that the above problem can be solved by placing a metal oxide powder in a bag that has a prescribed moisture permeability and that is filled with a prescribed gas.

The present invention is based on the above findings and has the following gist.
[1] A packaging body including a metal oxide powder and a bag that has the metal oxide powder placed therein and is sealed, the bag being filled with at least one gas selected from the group consisting of a noble gas, nitrogen gas, oxygen gas, and dry air, the metal oxide powder being a silica powder or a magnesia powder, the bag having a moisture permeability as measured according to JIS Z 0222-1959 of 0.30 g/(m²•day) or less.
[2] The packaging body according to the above [1], wherein the at least one gas selected from the group consisting of a noble gas, nitrogen gas, oxygen gas, and dry air has a water content of 3500 ppm by mass or less.
[3] The packaging body according to the above [1] or [2], wherein the metal oxide powder has a dielectric loss tangent of 0.004 or less.
[4] The packaging body according to any one of the above [1] to [3], wherein the metal oxide powder is surface-treated with a silane coupling agent.
[5] The packaging body according to any one of the above [1] to [4], wherein the metal oxide powder is a particle size distribution-adjusted product obtained through a classification treatment for removing metal oxide particles having a particle diameter of a prescribed value or more.
[6] A method for producing a packaging body, the method including a production step of producing a metal oxide powder, and a sealing step of placing the metal oxide powder in a bag that is filled with at least one gas selected from the group consisting of a noble gas, nitrogen gas, oxygen gas, and dry air, followed by sealing the bag, the metal oxide powder being a silica powder or a magnesia powder, the bag having a moisture permeability as measured according to JIS Z 0222-1959 of 0.30 g/(m²•day) or less.
[7] The method for producing a packaging body according to the above [6], wherein the at least one gas selected from the group consisting of a noble gas, nitrogen gas, oxygen gas, and dry air has a water content of 3500 ppm by mass or less.
[8] The method for producing a packaging body according to the above [6] or [7], wherein the metal oxide powder is placed in the bag and the bag is sealed in the sealing step within 300 hours after the production of the metal oxide powder in the production step.
[9] The method for producing a packaging body according to any one of the above [6] to [8], the method further including a surface treatment step of performing a surface treatment of the metal oxide powder produced in the production step with a silane coupling agent.
[10] The method for producing a packaging body according to any one of the above [6] to [9], the method further including a particle size distribution adjusting step of performing a classification treatment for removing metal oxide particles having a particle diameter of a prescribed value or more from the metal oxide powder produced in the production step.
[11] The method for producing a packaging body according to the above [9] or [10], the method further including a before-treatment sealing step of placing the metal oxide powder in a bag and sealing the bag within 40 minutes after the production of the metal oxide powder in the production step, the sealed bag being unsealed, after the before-treatment sealing step, to perform the surface treatment step and/or the particle size distribution adjusting step.

### Advantageous Effects of Invention

According to the present invention, it is possible to provide a packaging body for a metal oxide powder in which deterioration in the dielectric loss tangent of the metal oxide powder due to long-term storage can be suppressed, and a method for producing the packaging body.

### Description of Embodiments

### [Packaging body]

The packaging body of the present invention will be described below. The packaging body of the present invention includes a metal oxide powder and a bag that has the metal oxide powder placed therein and is sealed, the bag being filled with at least one gas selected from the group consisting of a noble gas, nitrogen gas, oxygen gas, and dry air, the metal oxide powder being a silica powder or a magnesia powder, the bag having a moisture permeability as measured according to JIS Z 0222-1959 of 0.30 g/(m²•day) or less. Accordingly, even when the metal oxide powder is stored for a long period of time, the dielectric loss tangent of the metal oxide powder is not deteriorated, or, if deteriorated, the degree of the deterioration is small. In addition, aggregation of the powder due to the long-term storage can also be suppressed.

### (Metal oxide powder)

The metal oxide powder in the packaging body of the present invention is a silica powder or a magnesia powder. Silica powder and magnesia powder have a small permittivity and a small dielectric loss tangent. Thus, when a silica powder or a magnesia powder is used as a material for use in a mobile communication system, the speed of signal propagation in the mobile communication system can be increased and the transmission loss of signals can be reduced. In a mobile communication system, a silica powder and a magnesia powder are used, for example, in a form of a composite material with a resin. The resin to be used together with the silica powder and the magnesia powder is not particularly limited, but examples thereof include polyethylene, polypropylene, an epoxy resin, a silicone resin, a phenol resin, a melamine resin, a urea resin, an unsaturated polyester, a fluororesin, polyamides, such as polyimide, polyamideimide, and polyetherimide, polyesters, such as polybutylene terephthalate and polyethylene terephthalate, polyphenylenesulfide, a fully aromatic polyester, polysulfone, a liquid crystal polymer, polyethersulfone, polycarbonate, a maleimide-modified resin, an ABS resin, an AAS (acrylonitrile-acrylic rubber•styrene) resin, and an AES (acrylonitrile•ethylene•propylene•diene rubber-styrene) resin. The proportions of the silica powder and the magnesia powder in the resin are appropriately selected according to the targeted physical properties, such as permittivity and dielectric loss tangent. For example, the amount of the resin used is appropriately selected in the range of 5 to 300 parts by mass relative to 100 parts by mass of the silica powder or the magnesia powder. In an application in which a resin is filled with the metal oxide powder, from the viewpoints of compatibility with the resin and control of the viscosity, it is effective to perform a surface treatment or a particle size distribution adjustment. Accordingly, in producing a packaging body for a metal oxide powder with which a resin is filled, a surface treatment step or a particle size distribution adjusting step is highly needed.

Silica powder can be used, not only as materials for use in a mobile communication system, but also for increasing the viscosity of a silicone oil and an epoxy resin, imparting thixotropy of a liquid paint, preventing precipitation of a pigment, reinforcing a silicone rubber, preventing fluidization of a sealant, and reducing the frictional resistance or preventing deposition by coating of a powder of a powdery paint, an agricultural chemical, a highly waterabsorbing resin, a powder soup, a toner, or the like. Silica powder can also be used as a heat insulating material, a quartz glass raw material, a catalyst support, an antiblocking agent of a film, and the like. Magnesia powder can be used, not only as materials for use in a mobile communication system, but also as raw materials of a high purity crucible, an electronic material substrate, and an optical material, a ceramic sintering additive, and the like. As described above, according to the packaging body of the present invention, it is possible to suppress deterioration in the dielectric loss tangent of the silica powder and magnesia powder due to long-term storage and also suppress the aggregation of the powder due to long-term storage. Accordingly, also when a silica powder and a magnesia powder are used in an application other than the application as a material for use in the mobile communication system, the packaging body of the present invention can provide significant effects.

The dielectric loss tangent of the metal oxide powder is preferably 0.004 or less. With a dielectric loss tangent of the metal oxide powder of 0.004 or less, the transmission loss can be reduced when a material containing the metal oxide powder is used for a mobile communication system. From this point of view, the dielectric loss tangent of the metal oxide powder is more preferably 0.003 or less, and further preferably 0.001 or less. According to the packaging body of the present invention, even when the metal oxide powder is stored for a long period of time, the dielectric loss tangent of the metal oxide can be kept within the above range. The dielectric loss tangent of the metal oxide powder can be measured by a method described later in the section of Examples. By moisture adsorbed on the surface of the metal oxide powder after producing the metal oxide powder, the dielectric loss tangent increases before the metal oxide is incorporated in the packaging body. A surface treatment tends to increase the dielectric loss tangent of the metal oxide powder. However, in the method for producing a packaging body of the present invention as described later, by a before-treatment sealing step further included in the method, even in a packaging body for the metal oxide powder resulting after a surface treatment and/or a particle size distribution adjustment, the dielectric loss tangent of the metal oxide powder in the packaging body can be kept low. For example, the dielectric loss tangent of the metal oxide powder resulting after a surface treatment can be kept at preferably 0.004 or less, and more preferably 0.003 or less.

The metal oxide powder is preferably surface-treated with a silane coupling agent. Thus, aggregation of the metal oxide powder during storage can be further suppressed. In addition, when the metal oxide powder is used with a resin in mixture, the strength of the interface between the metal oxide powder and the resin can be improved and the moldability of the mixture of the metal oxide powder and the resin can be improved. Various known silane coupling agents can be used for the surface treatment of the metal oxide powder with a silane coupling agent. Examples of the silane coupling agent include epoxy silanes, such as γ-glycidoxypropyltriethoxysilane and β-(3,4-epoxycyclohexyl)ethyltrimethoxysilane, aminosilanes, such as aminopropyltriethoxysilane and N-phenylaminopropyltrimethoxysilane, a vinylsilane, such as vinyltrimethoxysilane, acrylsilanes, such as acryloxytrimethoxysilane and 3-methacryloxypropyltrimethoxysilane, and octenyltrimethoxysilane.

The metal oxide powder is preferably a particle size distribution-adjusted product obtained through a classification treatment for removing metal oxide particles having a particle diameter of a prescribed value or more. Thus, when a liquid resin is filled with the metal oxide powder, the viscosity of the liquid resin filled with the metal oxide powder can be kept low, which allows for high filling with the metal oxide powder. From this point of view, the classification treatment preferably removes particles having a particle diameter of 30 µm or more, more preferably removes particles having a particle diameter of 20 µm or more, and further preferably removes particles having a particle diameter of 10 µm or more. Examples of the classification treatment include classification with a sieve, classification with a gravity classification apparatus, classification with an inertial classifier, and classification with a centrifugal classifier. Among the classification treatments, from the viewpoint of capability of precisely removing coarse particles, classification with a sieve is preferred.

The average particle diameter of the metal oxide powder in the case of a silica powder is preferably 0.7 to 10 µm, and more preferably 0.8 to 6.0 µm. The average particle diameter of the metal oxide powder in the case of a magnesia powder is preferably 20 to 150 µm. The average particle diameter of the metal oxide powder is the median size (the particle diameter at which the cumulative frequency reaches 50% by volume in a particle size distribution (d50)) in a particle size distribution measured by a laser diffraction/scattering method.

### (Bag)

The bag in the packaging body of the present invention has the metal oxide powder placed therein and is sealed. The bag has a moisture permeability as measured according to JIS Z 0222-1959 of 0.30 g/(m²•day) or less. When the moisture permeability of the bag is more than 0.30 g/(m²•day), water vaper in the outside of the bag may penetrate into the bag to form OH groups on the surface of the metal oxide powder. As a result, the dielectric loss tangent of the metal oxide powder may be deteriorated. From this point of view, the moisture permeability of the bag is preferably 0.10 g/(m²•day) or less, and more preferably 0.08 g/(m²•day) or less. The lower limit of the range of the moisture permeability of the bag is not particularly limited, but is, for example, 0.04 g/(m²•day). The moisture permeability of the bag can be specifically measured by a method described later in the section of Examples.

Examples of the material of the bag having such a moisture permeability as described above include a gas barrier film obtained by coating a film of a plastic, such as polyethylene, polypropylene, polycarbonate, polyethylene terephthalate, polyethylene naphthalate, polyethersulfone, an ethylene-vinyl alcohol copolymer (EVOH), or vinylidene chloride with a film having a gas barrier capability of metal aluminum, alumina, silica, silicon oxynitride, or the like, and a multilayer film thereof. Among the gas barrier films, the material may be a multilayer film, and is preferably a multilayer film in which a film of metal aluminum is interposed between polyethylene terephthalate films.

The thickness of the bag is, from the viewpoint of the strength of the bag, preferably 0.01 mm or more, and more preferably 0.06 mm or more. From the viewpoint of the balance between the moisture permeation suppressing effect attributable to the thickness of the bag and the cost, the thickness of the bag is preferably 1.0 mm or less, and more preferably 0.7 mm or less.

### (Gas)

The bag in the packaging body of the present invention is filled with at least one gas selected from the group consisting of a noble gas, nitrogen gas, oxygen gas, and dry air. Thus, it is possible to further suppress the formation of OH groups on the surface of the metal oxide powder by the moisture in the gas in the bag, which leads to deterioration in the dielectric loss tangent of the metal oxide powder. From this point of view, the water content of the gas in the bag is preferably 3500 ppm by mass or less, more preferably 1000 ppm by mass or less, and further preferably 500 ppm by mass or less. The lower limit of the range of the water content of the gas in the bag is not particularly limited, but is generally 50 ppm by mass from the viewpoint of the cost. The water content of the gas can be measured by a method described in the section of Examples. A preferred noble gas is argon gas.

### [Method for producing a packaging body]

The method for producing a packaging body of the present invention will be described below. The method for producing a packaging body of the present invention includes a production step of producing a metal oxide powder, a before-treatment sealing step of placing the metal oxide powder in a bag and temporarily sealing the bag, a surface treatment step of performing a surface treatment of the metal oxide powder produced in the production step with a silane coupling agent, a particle size distribution adjusting step of performing a classification treatment for removing metal oxide particles having a particle diameter of a prescribed value or more from the metal oxide powder produced in the production step, and a sealing step of placing the metal oxide powder in a bag that is filled with at least one gas selected from the group consisting of a noble gas, nitrogen gas, oxygen gas, and air, followed by sealing the bag. As described later, the before-treatment sealing step, the surface treatment step, and the particle size distribution adjusting step are optional steps, and thus, the method for producing a packaging body of the present invention need not include the before-treatment sealing step, the surface treatment step, and the particle size distribution adjusting step. The metal oxide powder is a silica powder or a magnesia powder, and the moisture permeability of the bag as measured according to JIS Z 0222-1959 is 0.30 g/(m²•day) or less.

### (Production step)

In the production step, a silica powder can be produced by a known method. For example, a silica powder may be produced by hydrolyzing silicon tetrachloride in an oxygen/hydrogen flame at a high temperature of 1000°C or higher, or a silica powder may be produced by subjecting silica or metal silicon to flame spraying.

In the production step, a magnesia powder can be produced by a known method. For example, a magnesia powder may be produced by a method of purifying basic magnesium carbonate, a magnesia powder may be produced by an underwater spark discharge method, a magnesia powder may be produced by a gas phase oxidation method, or a magnesium powder may be produced by flame spraying of magnesium oxide or metal magnesium.

### (Before-treatment sealing step)

The before-treatment sealing step is a step of placing the metal oxide powder in a bag, followed by temporarily sealing the bag, before performing the surface treatment step and/or the particle size distribution adjusting step. As described later, the surface treatment step and the particle size distribution adjusting step are optional steps, and the before-treatment sealing step is also an optional step.

Since the bag used in the treatment sealing step is the same as the bag described in the section of packaging body, and the explanation is omitted. The sealing of the bag can be achieved, for example, by heat sealing (heat fusion). It is preferred that the metal oxide powder is placed in the bag while removing the air so as to prevent the air from entering.

It is preferred to place the metal oxide powder in the bag and seal the bag in the before-treatment sealing step within 40 minutes after the production of the metal oxide powder in the production step. Thus, it is possible to suppress deposition of moisture in the outside air on the surface of the metal oxide powder, which lead to formation of OH groups. From this point of view, the bag is preferably sealed within 40 minutes after the production of the metal oxide powder in the production step.

### (Surface treatment step)

The surface treatment step is an optional step. As described above, in production of a packaging body of a metal oxide powder with which a resin is filled, the surface treatment step is preferably provided.

The method for producing a packaging body of the present invention preferably further includes a surface treatment step of performing a surface treatment of the metal oxide powder produced in the production step with a silane coupling agent. Thus, aggregation of the metal oxide powder in storage can further be suppressed. The silane coupling agent used in the surface treatment step is the same as the silane coupling agent described in the section of packaging body, and thus, explanation of the silane coupling agent is omitted. The surface treatment of the metal oxide with a silane coupling agent is preferably performed by a dry treatment method.

### (Particle size distribution adjusting step)

The particle size distribution adjusting step is an optional step. As described above, in production of a packaging body of a metal oxide powder with which a resin is filled, the particle size distribution adjusting step is preferably provided.

The method for producing a packaging body of the present invention preferably further includes a particle size distribution adjusting step of performing a classification treatment for removing metal oxide particles having a particle diameter of a prescribed value or more from the metal oxide powder produced in the production step. Thus, when a liquid resin is filled with the metal oxide powder, the viscosity of the liquid resin filled with the metal oxide powder can be kept low, which allows for high filling with the metal oxide powder. The classification treatment in the particle size distribution adjusting step and the particle diameter of particles to be removed in the classification treatment are the same as those described in the section of packaging body, and thus, the explanation is omitted.

### (Sealing step)

The sealing step is a step of placing the metal oxide powder in a bag filled with at least one gas selected from the group consisting of a noble gas, nitrogen gas, oxygen gas, and air, followed by sealing the bag.

The gas and bag used in the sealing step are the same as the gas and bag described in the section of packaging body, and thus, the explanation is omitted.

The time period from the production of the metal oxide powder in the production step to the sealing in the sealing step is preferably within 300 hours. Even when the surface treatment step and the particle size distribution adjusting step are performed, the metal oxide powder can be stored in the state with a sufficiently low dielectric loss tangent by keeping the time to the sealing within 300 hours.

When optional steps, such as the surface treatment step and the particle size distribution adjusting step, are performed, the time period from completion of the step just before the sealing step to the sealing of the bag having the metal oxide powder placed therein is preferably within 40 minutes.

### Examples

The present invention will be described in detail below with reference to Examples and Comparative Example. The present invention is not to be limited to the following examples.

Packaging bodies of Examples and Comparative Example were subjected to the following evaluations.

### (Moisture permeability of bag)

The moisture permeability of each bag was measured according to JIS Z 0222-1959.

### (Water content of gas)

The water content of a gas was measured by gas chromatography. For the water content in a sealed bag, the sample was taken by sticking an injection needle into the bag to suck the gas stored in the bag with an injector. Then, the water content of the taken gas was measured by gas chromatography.

### (Dielectric loss tangent of metal oxide powder)

The dielectric loss tangent of the metal oxide powder was measured at a frequency of 1.0 GHz using a perturbation-type cavity resonator measurement system (manufactured by KEYENCE CORPORATION).

### (Water content of metal oxide powder)

The metal oxide powder was placed in a Karl Fischer trace moisture meter (tradename "CA-100", manufactured by Mitsubishi Chemical Corporation), and while heating the metal oxide powder to increase the temperature thereof with an electric heater, the generated water was measured by the Karl Fischer coulometric titration method. The water generated until the temperature reached 200°C was defined as "physically adsorbed water". Then, the quantity of the physically adsorbed water was divided by the mass of the metal oxide powder used in the measurement to thereby calculate the water content (% by mass) in the metal oxide powder.

### (Specific surface area)

The specific surface area of the metal oxide powder was measured by a BET method with a specific surface area analyzer (tradename "Macsorb HM model-1208", manufactured by

### MACSORB).

### (Average particle diameter)

The particle diameter at which the cumulative frequency reached 50 % in a particle size distribution (d50) of the metal oxide powder was measured as the average particle diameter using a laser-type particle size distribution analyzer (tradename "MT-3300EX", manufactured by Nikkiso Co., Ltd.).

The following packaging bodies were produced.

### (Packaging body 1)

### <Preparation of silica powder A>

Using a flame spraying method, silica particles having an average particle diameter of 0.8 µm, a specific surface area of 6.0 m²/g, and d100 (a particle diameter at which the cumulative frequency reached 100% in a particle size distribution) of 5.1 µm were synthesized. The resulting silica powder was placed in an amount of 1.6 kg in a mullite container with an internal volume of 8 L, followed by a heat treatment in a maffle furnace in the atmosphere at 970°C for 8 hours. The silica powder resulting from the heat treatment was transferred into an aluminum bag within 30 minutes while removing the air (corresponding to the before-treatment sealing step). The temperature of the sample at this time was 23°C.

Then, the bag was unsealed, and a surface treatment was applied with a silane coupling agent (compound name: 3-methacryloxypropyltrimethoxysilane, tradename "KBM-503", manufactured by Shin-Etsu Chemical Co., Ltd.). Specifically, 1.5 kg of the silica powder was put into a pot mill (volume: 10 L) having 5 kg of ϕ10 mm alumina balls, and 0.51 g of the silane coupling agent was added thereto. Then, the pot mill was rotated to perform a surface treatment for 15 minutes.

Subsequently, a silica powder containing aggregation particles of 1000 µm or larger was removed using a sieve with an aperture of 1 mm to produce a silica powder A.

### <Enclosure of silica powder A>

1500 g of the silica powder A was placed in a bag A (tradename "Lamizip", manufactured by SEISAN NIPPONNSHA LTD., moisture permeability: 0.1 g/(m²•day), material: gas barrier film of an aluminum film coated with PE) having a size of 340 mm × 480 mm × 60 mm. Then, after removing the air in the bag A, the bag A was filled with 5000 ml of a gas A (kind of gas: nitrogen, water content: 53 ppm by mass), and then, the bag A was sealed with a heat sealer (tradename "FV-801-01", manufactured by HAKKO Corporation) to produce a packaging body 1. The time period from the adjustment of the particle size distribution to completion of the sealing of the bag A was 30 minutes. Subsequently, the packaging body 1 was stored in an environment of a temperature of 50°C and a relative humidity of 90% under the atmospheric pressure for at most 60 days to produce the packaging body 1 after storage.

The silica powder A was taken out of the packaging body 1 after the long-term storage, and the dielectric loss tangent and the water content were measured. The dielectric loss tangent was 0.0029 and the water content (200°C) was 262 ppm by mass.

### (Packaging body 2)

A silica powder B was produced in the same manner as for the silica powder A except for not performing a treatment with a silane coupling agent. Then, a packaging body 2 was produced in the same manner as for the packaging body 1 except for using the silica powder B in place of the silica powder A. After a 60-day storage, the silica powder B was taken out of the packaging body 2, and the dielectric loss tangent and the water content were measured. The dielectric loss tangent was 0.0010 and the water content (200°C) was 535 ppm by mass.

### (Packaging body 3)

### <Production of magnesia powder A>

From a spherical magnesium (DMG-120, manufactured by Tateho Chemical Industries Co., Ltd.), particles having a particle diameter of 300 µm or more were removed to produce a magnesia powder. Within 30 minutes after cooling to 31°C, the magnesia powder was transferred into an aluminum bag while removing the air. The aluminum bag was unsealed and the particle size distribution was adjusted to provide a magnesia powder A.

### <Enclosure of magnesia powder A>

1000 g of the magnesia powder A was placed in a bag A ((tradename "Lamizip", manufactured by SEISAN NIPPONNSHA LTD., moisture permeability: 0.1 g/(m²•day), material: gas barrier film of an aluminum film coated with PE) having a size of 340 mm × 480 mm × 60 mm. Then, after removing the air in the bag A, the bag A is filled with a gas A (kind of gas: argon, water content: 30 ppm by mass), and then, the bag A was sealed with a heat sealer (tradename "FV-801-01", manufactured by HAKKO Corporation) to produce a packaging body 3. The time period from the production of the magnesia powder A to completion of the sealing of the bag A was 25 minutes. Subsequently, the packaging body 3 was stored in an environment of a temperature of 50°C and a relative humidity of 90% under the atmosphere for at most 2 months (long-term storage) to produce the packaging body 3 after storage. The magnesia powder A was taken out of the packaging body 3 after the long-term storage, and the dielectric loss tangent and the water content were measured. The dielectric loss tangent was 0.0009 and the water content (200°C) was 126 ppm by mass.

### (Packaging body 4)

A bag B (tradename "Nylon Poly Barrier TL type 28-40", moisture permeability: 9.8 g/(m²•day)) was used in place of the bag A. A packaging body 3 was produced in the same manner as for the packaging body 1 except for the above change. The silica powder A was taken out of the packaging body 4 after the long-term storage, and the dielectric loss tangent and the water content were measured. The dielectric loss tangent was 0.0048 and the water content (200°C) was 1310 ppm by mass.

The results are shown in Table 1.

**Table 1**

| | | Packaging body 1 | | Packaging body 2 | | Packaging body 3 | | Packaging body 4 | |
|---|---|---|---|---|---|---|---|---|---|
| | | Example | | Example | | Example | | Comparative Example | |
| | | Before storage | After storage | Before storage | After storage | Before storage | After storage | Before storage | After storage |
| Metal oxide powder | Kind of metal oxide | silica | | silica | | magnesia | | silica | |
| | Dielectric loss tangent | 0.0025 | 0.0029 | 0.0006 | 0.0010 | 0.0003 | 0.0009 | 0.0025 | 0.0048 |
| | Water content (ppm by mass) | 245 | 262 | 490 | 535 | 71 | 126 | 245 | 1310 |
| | Specific surface area (m²/g) | 6.0 | | 6.0 | | 0.1 | | 6.0 | |
| | Average particle diameter (µm) | 0.8 | | 0.8 | | 105.0 | | 0.8 | |
| | Surface treatment with silane coupling agent | Yes | | No | | Yes | | Yes | |
| | Particle size distribution adjustment | Yes | | Yes | | Yes | | Yes | |
| Bag | Moisture permeability (g/(m²•day)) | 0.1 | | 0.1 | | 0.1 | | 9.8 | |
| Gas | Kind of gas | nitrogen | | nitrogen | | argon | | nitrogen | |
| | Water content (ppm by volume) | 53 | 210 | 53 | 74 | 30 | 68 | 53 | 820 |

It was found from the above examples that, by enclosing a metal oxide powder in a bag that is filled with at least one gas selected from the group consisting of a noble gas, nitrogen gas, oxygen gas, and dry air and that has a moisture permeability of 0.30 g/(m²•day) or less, deterioration in the dielectric loss tangent of the metal oxide powder due to long-term storage can be suppressed.

## Claims

1. A packaging body comprising
a metal oxide powder and
a bag that has the metal oxide powder placed therein and is sealed,
the bag being filled with at least one gas selected from the group consisting of a noble gas, nitrogen gas, oxygen gas, and dry air,
the metal oxide powder being a silica powder or a magnesia powder,
the bag having a moisture permeability as measured according to JIS Z 0222-1959 of 0.30 g/(m²•day) or less.

2. The packaging body according to claim 1, wherein the at least one gas selected from the group consisting of a noble gas, nitrogen gas, oxygen gas, and dry air has a water content of 3500 ppm by mass or less.

3. The packaging body according to claim 1 or 2, wherein the metal oxide powder has a dielectric loss tangent of 0.004 or less.

4. The packaging body according to any one of claims 1 to 3, wherein the metal oxide powder is surface-treated with a silane coupling agent.

5. The packaging body according to any one of claims 1 to 4, wherein the metal oxide powder is a particle size distribution-adjusted product obtained through a classification treatment for removing metal oxide particles having a particle diameter of a prescribed value or more.

6. A method for producing a packaging body, the method comprising
a production step of producing a metal oxide powder, and
a sealing step of placing the metal oxide powder in a bag that is filled with at least one gas selected from the group consisting of a noble gas, nitrogen gas, oxygen gas, and dry air, followed by sealing the bag,
the metal oxide powder being a silica powder or a magnesia powder,
the bag having a moisture permeability as measured according to JIS Z 0222-1959 of 0.30 g/(m²•day) or less.

7. The method for producing a packaging body according to claim 6, wherein the at least one gas selected from the group consisting of a noble gas, nitrogen gas, oxygen gas, and dry air has a water content of 3500 ppm by mass or less.

8. The method for producing a packaging body according to claim 6 or 7, wherein the metal oxide powder is placed in the bag and the bag is sealed in the sealing step within 300 hours after the production of the metal oxide powder in the production step.

9. The method for producing a packaging body according to any one of claims 6 to 8, the method further comprising a surface treatment step of performing a surface treatment of the metal oxide powder produced in the production step with a silane coupling agent.

10. The method for producing a packaging body according to any one of claims 6 to 9, the method further comprising a particle size distribution adjusting step of performing a classification treatment for removing metal oxide particles having a particle diameter of a prescribed value or more from the metal oxide powder produced in the production step.

11. The method for producing a packaging body according to claim 9 or 10, the method further comprising a before-treatment sealing step of placing the metal oxide powder in a bag and sealing the bag within 40 minutes after the production of the metal oxide powder in the production step,
the sealed bag being unsealed, after the before-treatment sealing step, to perform the surface treatment step and/or the particle size distribution adjusting step.
